# EUROPEAN PATENT SPECIFICATION

(11) **EP 1 975 050 B1**
(45) Date of publication and mention of the grant of the patent: **11.04.2012**
(21) Application number: 08100248.7
(22) Date of filing: 09.01.2008
(51) Int. Cl.: B62J 17/04

(54) **Motorcycle comprising a wind screen structure**
Motorrad mit einer Windschutzscheibenstruktur
Motocyclette comprenant une structure de pare-brise

(30) Priority: 26.03.2007 JP 2007079472
(43) Date of publication of application: 01.10.2008
(73) Proprietor: Honda Motor Co., Ltd., Tokyo 107-8556 (JP)
(72) Inventor: Tokumasu, Nobutaka, Saitama 351-0193 (JP); Nakajima, Jun, Saitama 351-0193 (JP); Misaki, Kenichi, Saitama 351-0193 (JP); Inoue, Yoshihiro, Saitama 351-0193 (JP)
(74) Representative: Rupp, Christian

(56) References cited:
- EP-A- 1 752 367
- JP-A- 2006 082 810
- US-A- 4 355 838
- US-A1- 2006 028 045

## Description

The present invention relates to an improvement of a wind screen which is mounted on an upper portion of a cowling which covers a front upper portion of a vehicle body in a vertically movable manner.

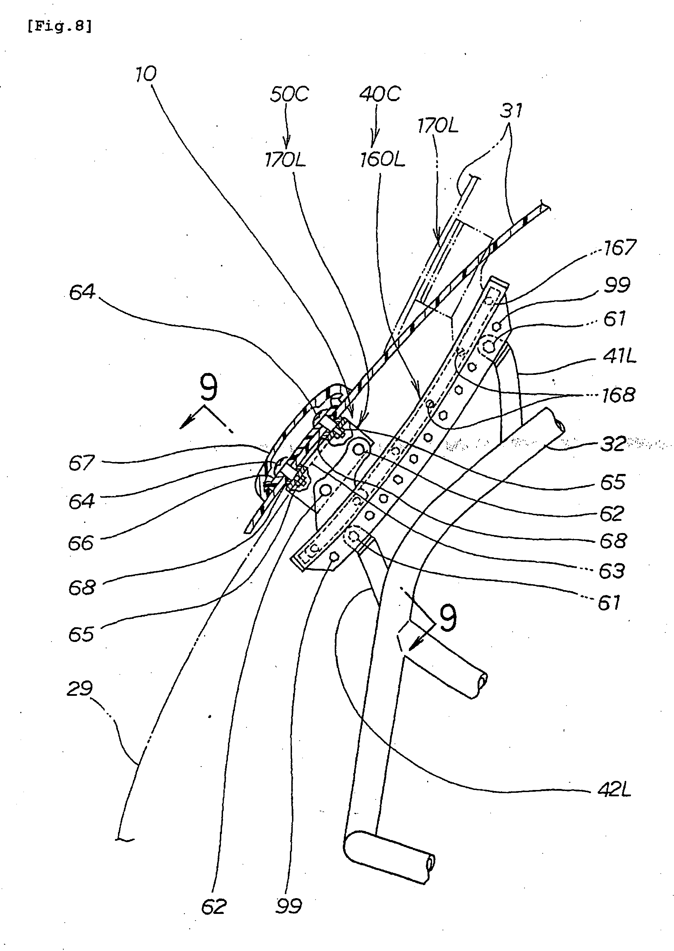

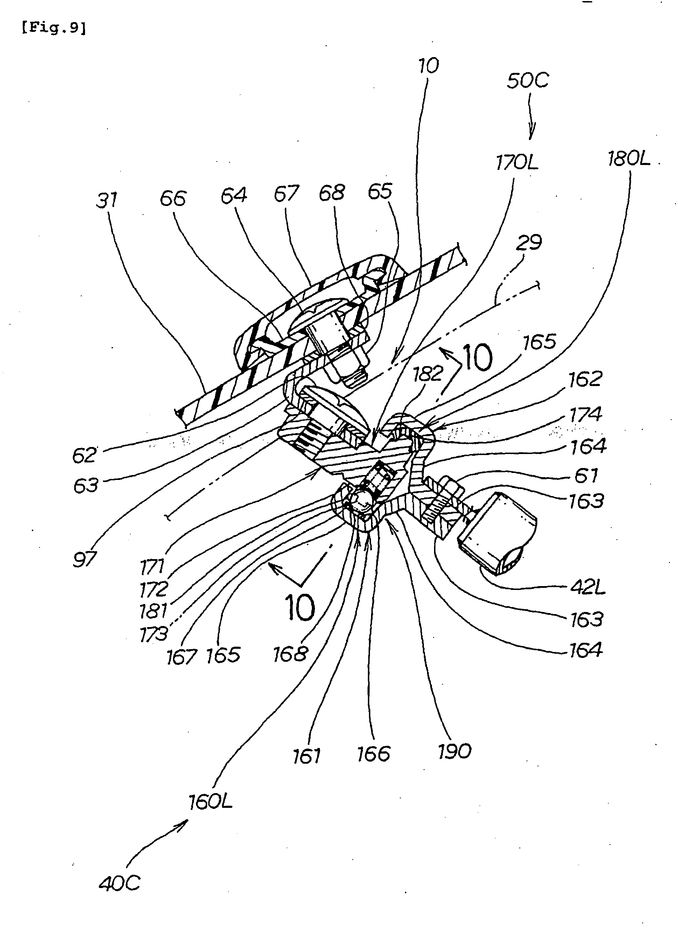

A wind screen is mounted on an upper portion of a cowling which covers a front upper portion of a vehicle body for preventing a wind from impinging on a rider during traveling. There has been proposed a motorcycle including a moving device which can move a wind screen in the vertical direction using a motor.
[Patent Document 1] JP-A-2003-81160 (Fig. 8, Fig. 9)

As shown in Fig. 8 of the patent document 1, a moving device 90 includes arcuate guide portions 91 which are mounted on an upper cowl 19 and extend in the y direction and, at the same time, project in the vehicle-body reward direction, movable portions 92 which are movably supported on the guide portions 91, and connection portions 94 which connect the movable portions 92 and a wind screen 27 to each other. Further, in Fig. 9, the moving device 90 includes the guide portions 91, an electrically-operatedmotor 93 which is fixed to a center portion of a support member 95 which is supported on the guide portions 91, and push cables 96, 96 which connect the electrically-operated motor 93 and the left and right movable portions 92, 92.

With the rotation of the electrically-operated motor 93 in the predetermined direction, the push cables 96, 96 move the movable portions 92, 92 to positions above the guide portions 91, 91 and hence, the wind screen (indicated by numeral 27 in Fig. 8) is arranged at an upper position (see numeral 27' in Fig. 8). When the electrically-operated motor 93 is rotated in the reverse direction from such a state, the push cables 96, 96 move the movable portions 92, 92 to positions below the guide portions 91, 91 and hence, the wind screen is arranged at a lower position.

However, the moving device 90 of patent document 1 uses the electrically-operated motor 93 as a drive source of the movable portions 92, 92 and hence, a cost of the moving device 90 is pushed up.
U.S. Patent Publication No. 2006/028045 discloses a lightweight apparatus for driving windscreen of vehicles with having high rigidity. An apparatus provided with front and rear guide rails that are mounted right and left in one pair on a vehicle body such as motorcycle, guide members moving in the front and rear guide rails, one pair of the right and left carrier plates supported by guide members and fixed to the windscreen, and the driving mechanism synchronously reciprocates the carrier plates. The driving mechanism comprises the control cables which are wired like figure of 8, and the cable driving mechanism that reciprocates the inner cable of the control cables.
JP Patent Publication No. 2006/082810 discusses a solution to the problem of how to freely arrange a motor for driving a windshield adjusting device for a motorcycle or the like at a position separated from a windshield.
EP Patent Publication No. 1752367 discloses how to reduce the size of a windscreen position adjusting means having a plurality of guide rails for supporting a windscreen. A windscreen and a first supporting means are provided. The first supporting means has a first movement path extending to be inclined rearward and upward, pivotally supports the windscreen and moves the windscreen along the first movement path. A second supporting means is further provided that has a second movement path with an inclination angle to the horizontal larger than that of the first movement path, supports the windscreen at a position rearward of a position where the first supporting means supports the windscreen, and moves the windscreen along the second movement path. The first supporting means and the second supporting means are disposed side by side in a vehicle width direction.
U.S. Patent No. 4, 355, 838 discloses a motorcycle fairing with improved safety and operational features including a long-throw, strengthened adjustable windscreen, an electrical wiper motor and wiper assembly attached directly to the adjustable windscreen and cornering lights operated by both the turn signals and independent switch means. The adjustable windscreen has a pair of female members fixed to the windscreen and a pair of male track members fixed to the fairing. In assembly, the female members are connected to the male track members and slide along the track members to a desired position. Release means associated with the male and female members serve to lock the windscreen in a selected position. The windshield wiper motor and/or wiper arm and blade are attached to the adjustable windscreen and move up and down with the windscreen. Cornering lights mounted on fairing side faces are operated by both the motorcycle's turn signals and an independent switch mounted on the fairing.
Accordingly, there has been a demand for the development of the wind screen structure of a motorcycle which can move a wind screen in the vertical direction while manufacturing the wind screen structure at a low cost.

The present invention thus proposes a motorcycle comprising a wind screen structure which is constituted by a wind screen being mounted on an upper portion of a cowling which covers a front upper portion of a vehicle body in a vertically movable manner, a left-side rail and a right-side rail which are fixed to a vehicle body side and extend in a vertical direction, and a left-side slider and a right-side slider which are mounted on a wind screen side and are engaged with the left-side rail and the right-side rail, respectively, wherein each of the left-side and the right-side sliders includes a guide member which is in slidable contact with the left-side rail and the right-side rail, respectively, in a width direction of the vehicle body, characterized in that each of the left-side and the right-side sliders includes a locking mechanism which is adapted to be engaged with the left-side rail and the right-side rail, respectively, so that the wind screen can be fixed at a desired position, wherein in a lateral direction as viewed from a front side of the vehicle body each of the left-side and the right-side rails is split in two half bodies, a left rail half body and a right rail half body, and wherein each of the left-side and the right-side rails is formed by joining the left rail half body and the right rail half body, respectively.

The invention according to claim 2 is characterized in that the left-side and the right-side rails are curved, so that the wind screen may be moved upward in an erected state, and the left-side and the right-side rails are formed by casting.

According to the invention described in claim 1, the wind screen structure of the motorcycle is constituted of the left-side and right-side rails, the left-side and right-side sliders and the guide members. According to claim 1, a drive source such as an electrically-operated motor becomes unnecessary and hence, it is possible to provide the wind screen structure of the motorcycle which can move the wind screen in the vertical direction while manufacturing the wind screen structure at a low cost.

Further, the slider includes the guide member which is brought into slidable contact with the rail in the width direction of the vehicle body and hence, compared to a case in which the guide member is mounted on the slider in the longitudinal direction of the vehicle body, an assembled size of the rail and the slider in the longitudinal direction of the vehicle body can be made small. Accordingly, the wind screen can be arranged closer to the cowling. To consider this situation from a side of the vehicle body, a mounting height of the wind screen can be lowered. Due to such a constitution, the motorcycle can be further miniaturized.

Further to the invention described in claim 1, the slider includes the locking mechanism which engages the wind screen with the rail for fixing the wind screen and hence, the wind screen can be fixed at a desired position.

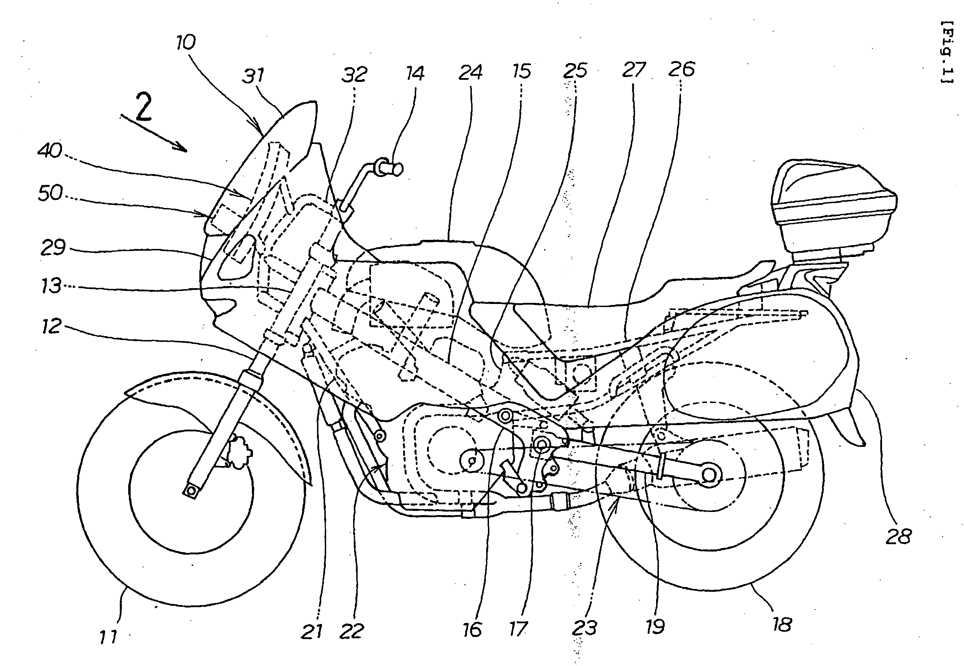

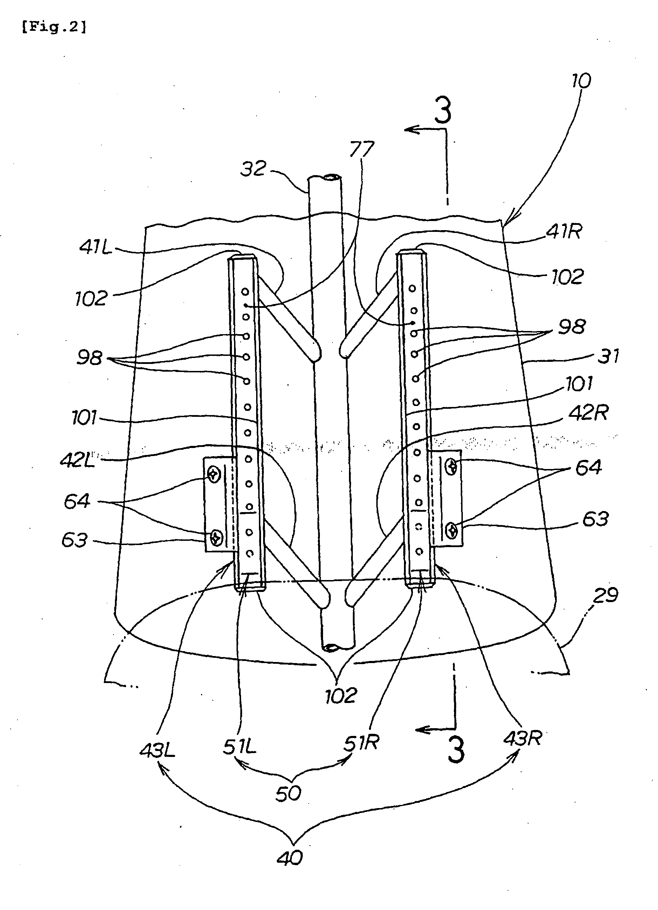

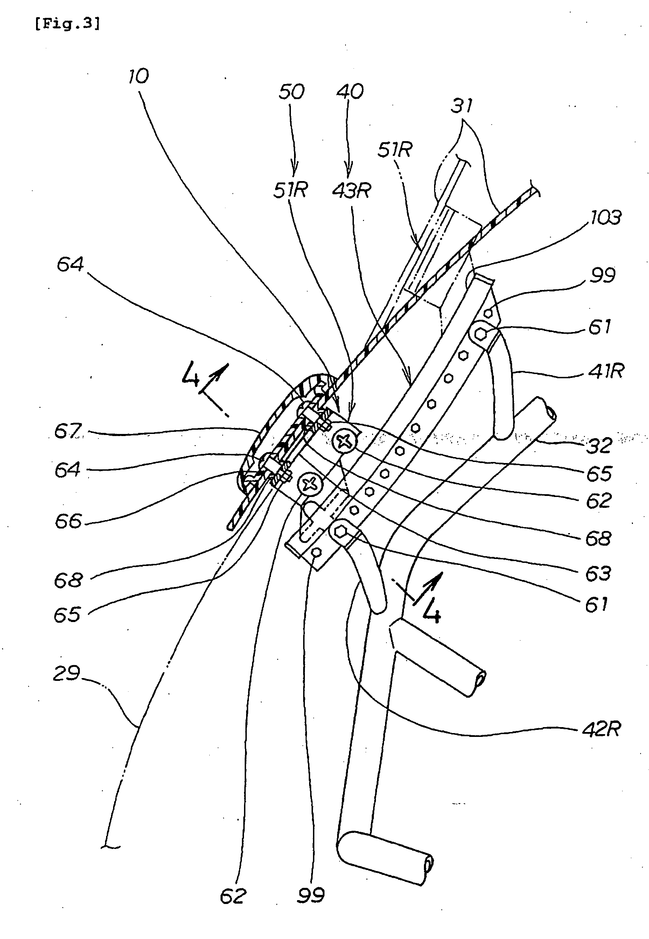

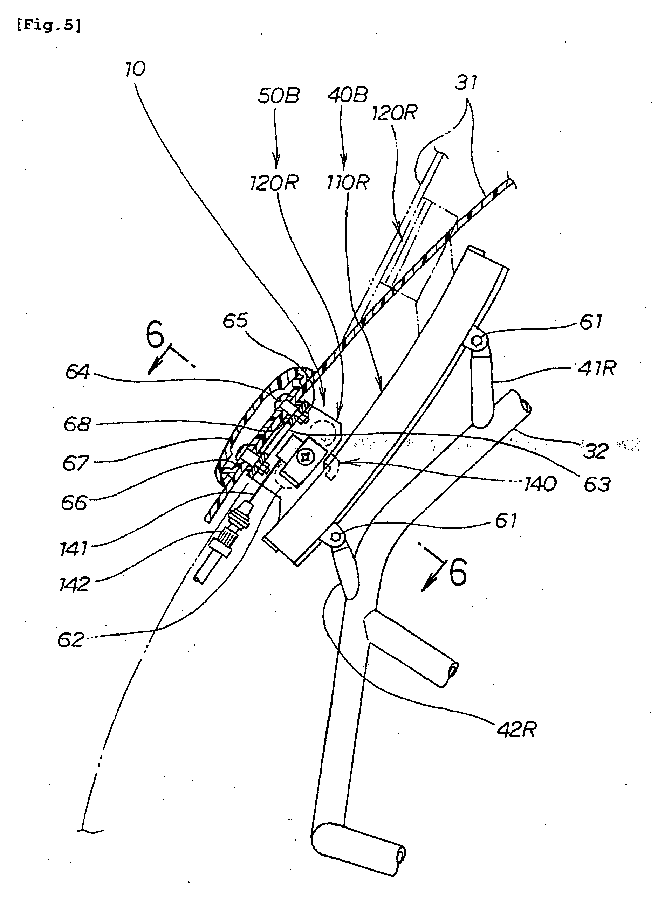

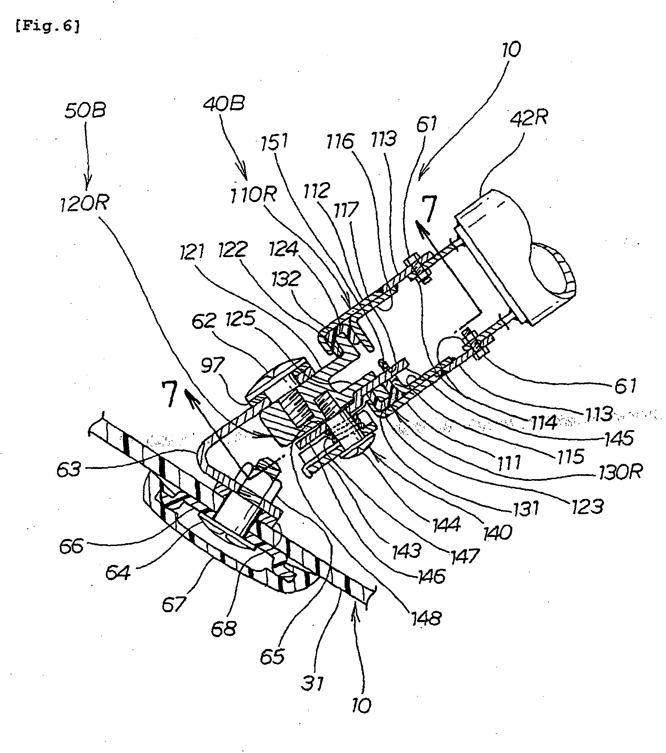

According to the invention described in claim 2, the rail is curved and hence, when the wind screen is moved upwardly, it is possible to bring the wind screen into an erected state.
Further, the rail is split in two in the lateral direction and is formed by casting and hence, it is possible to easily manufacture the curved rail.
[Fig. 1]
   A side view of a motorcycle according to the present invention.
[Fig. 2]
   A view as viewed in the direction of an arrow 2 in Fig. 1.
[Fig. 3]
   A cross-sectional view taken along a line 3-3 in Fig. 2.
[Fig. 4]
   A cross-sectional view taken along a line 4-4 in Fig. 3.
[Fig. 5]
   A view of a modification of the embodiment shown in Fig. 3.
[Fig. 6]
   A cross-sectional view taken along a line 6-6 in Fig. 5.
[Fig. 7]
   A cross-sectional view taken along a line 7-7 in Fig. 6.
[Fig. 8]
   A cross-sectional view of another wind screen of a motorcycle according to the present invention.
[Fig. 9]
   A cross-sectional view taken along a line 9-9 in Fig. 8.
[Fig. 10]
   A cross-sectional view taken along a line 10-10 in Fig. 9.

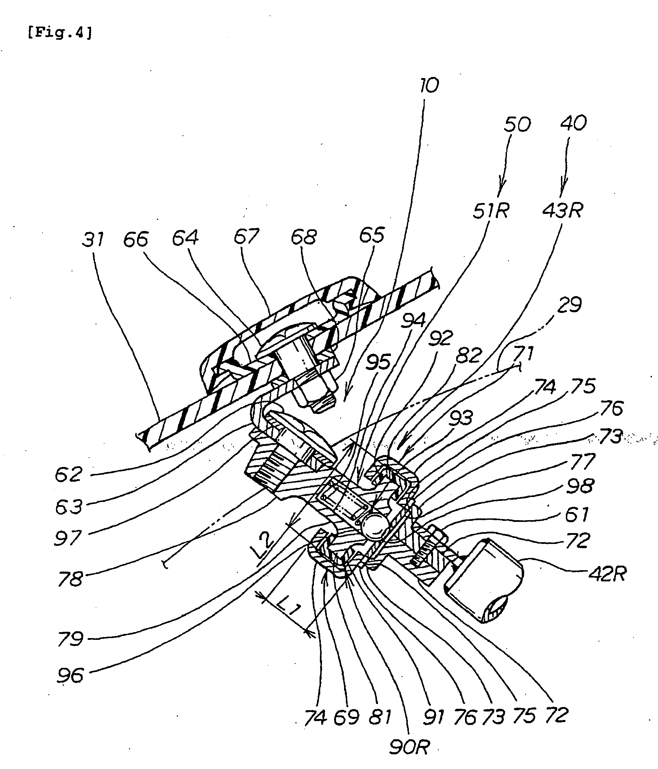

A best mode for carrying out the present invention is explained hereinafter in conjunction with attached drawings. Further, the invention according to claim 1 is explained mainly in conjunction with Fig. 2, the invention according to claim 2 is explained mainly in conjunction with Fig. 4, and the invention according to claim 3 is explained mainly in conj unction with Fig. 3. Here, the drawings are viewed in the direction of symbols.

Fig. 1 is a side view of a motorcycle according to the present invention. "Front", "rear", "left", "right", "up" and "down" which are explained hereinafter indicate directions as viewed from a rider.
A motorcycle 10 includes a front fork 12 which supports a front wheel 11, a head pipe 13 which houses and supports the front fork 12, a handle 14 which is mounted on an upper portion of the head pipe 13 and is connected to the front fork 12, a main frame 15 which is configured to extend obliquely in the rearward and downward direction from the head pipe 13 and forms a vehicle body, a rear swing arm 19 which has a front end thereof rockably supported on a pivot plate 16 mounted on a rear end portion of the main frame 15 by a pivot shaft 17 and supports a rear wheel 18 on a rear end thereof, an engine 22 which is arranged below the main frame 15 and is supported on the main frame 15, the pivot plate 16 and a down tube 21 which extends obliquely in the rearward and downward direction from the head pipe 13, a power transmission mechanism 23 which transmits power of the engine 22 to the rear wheel 18, a fuel tank 24 which is arranged above the engine 22, a seat rail 26 which is arranged behind the fuel tank 24 and extends rearwardly from a stay 25 mounted on the pivot plate 16, a seat 27 which is supported on the seat rail 26, a rear cover 28 which is configured to cover the seat rail 26 and the rear wheel 18, a cowling 29 which covers the head pipe 13 and the like, a wind screen 31 which is mounted on an upper portion of the cowling 29 in a vertically movable manner, a rail 40 (described later in detail) which is mounted on a distal end of a support member 32 which extends in the frontward and upward direction from the head pipe 13 and extends vertically, and a slider 50 (described later in detail) which is mounted on the wind screen 31 and is engaged with the rail 40.

Fig. 2 is a view as viewed in the direction indicated by an arrow 2 in Fig. 1. In the drawing, the rail 40 is constituted of a left-side rail 43L which is fixed to an upper connection member 41L and a lower connection member 42L which extend to a left side in the drawing from an upper portion and a lower portion of the support member 32, and a right-side rail 43R which is fixed to an upper connection member 41R and a lower connection member 42R which extend to a right side in the drawing from the upper portion and the lower portion of the support member 32.

Further, the slider 50 is constituted of a left-side slider 51L which is engaged with the left-side rail 43L and a right-side slider 51R which is engaged with the right-side rail 43R.

The left-side slider 51L includes a guide member 90L not shown in the drawing which is configured to be in slidable contact with the left-side rail 43L in the lateral direction in the drawing which is a vehicle width direction of a vehicle body, and the right-side slider 51R includes a guide member 90R not shown in the drawing (described later in detail) which is configured to be in slidable contact with the right-side rail 43R in the lateral direction.

Here, the structure of the left-side rail 43L and the structure of the right-side rail 43R are substantially equal to each other, the structure of the left-side slider 51L and the structure of the right-side slider 51R are substantially equal to each other, and the structure of the guide member 90L and the structure of the guide member 90R are substantially equal to each other. Accordingly, hereinafter, the explanation is made with respect to a combination of the right-side rail 43R, the right-side slider 51R and the guide member 90R, and the explanation of the left-side rail 43L, the left-side slider 51L and the guide member 90L is omitted.

Fig. 3 is a cross-sectional view taken along a line 3-3 in Fig. 2. In the drawing, the right-side rail 43R is mounted on the upper connection member 41R and the lower connection member 42R which extend from the support member 32 using a plurality of bolts 61.
Further, a connectionplate 63 is mounted on the right-side slider 51R using connection screws 62, 62, and the wind screen 31 is mounted on an upper surface of the connection plate 63 using two screws 64, 64 and two nuts 65, 65.

Numeral 66 indicates a seat, numeral 67 indicates a cover, and numerals 68, 68 indicate washers.
The detailed structures of the right-side rail 43R and the right-side slider 51R are explained using a following drawing.

Fig. 4 is a cross-sectional view taken along a line 4-4 in Fig. 3. In the drawing, the right-side rail 43R is configured to be formed by joining a left rail half body 69 and a right rail half body 71 which are split in two in the lateral direction and are formed by casting.

The left rail half body 69 or the right rail half body 71 includes a rearportion 72 into which the bolts 61 are threaded, an intermediate portion 73 which is formed in an L shape toward the wind screen 31 from the rear portion 72, and a front portion 74 which is formed in a C shape toward the wind screen 31 from the intermediate portion 73. That is, the left rail half body 69 or the right rail half body 71 is a rail having a large wall thickness which is contiguously formed of the rear portion 72, the intermediate portion 73 and the front portion 74.

Further, openings 75, 75 are formed in the intermediate portions 73 of the left rail half body 69 and the right rail half body 71 at a fixed interval in the upward and downward direction from a surface of the drawing, and a positioning plate 77 which includes projecting portions 76, 76 to be fitted into the openings 75, 75 at a fixed interval in the upward and downward direction from a surface of the drawing is mounted on the left rail half body 69 and the right rail half body 71.

These left rail half body 69 and right rail half body 71 have lengths L1 of the respective front portions 74 shortened and hence, these left and right rail half bodies 69, 71 can be arranged in a space sandwiched between exterior parts and meters while realizing space saving.
Next, the detailed structure of the right-side slider 51R is explained.

The right-side slider 51R includes a body portion 78 which mounts the connection plate 63 thereon using the connection screws 62 and extends toward the right-side rail 43R. On a rear portion 79 of the body portion 78, a left projecting portion 81 and a right projecting portion 82 which respectively project toward an inner surface of the right-side rail 43R are formed.

The guide member 90R is mounted on the left projecting portion 81 and the right projecting portion 82 in a state that the right-side slider 51R is brought into slidable contact with the right-side rail 43R. The guide member 90R is constituted of a left guide 91 and a right guide 92, wherein the left guide 91 is mounted on the left projecting portion 81 using an adhesive agent, for example, and the right guide 92 is mounted on the right proj ectingportion 82 using an adhesive agent, for example. The left guide 91 and the right guide 92 are molded products made of polytetrafluoroethylene, for example.

Here, a mounting method of the left guide 91 and the right guide 92 adopts the adhesive agent. However, the left guide 91 and the right guide 92 may be mounted using screws. Further, the mounting method may be changed to other mounting method without any problems.
Further, although the left guide 91 and the right guide 92 are made of polytetrafluoroethylene, the left guide 91 and the right guide 92 may be made of polyethylene or polyethylene terephthalate, and the left guide 91 and the right guide 92 may be made of other resin material without any problems.

The left guide 91 and the right guide 92 receive a wind load which the wind screen 31 receives with a large size L2 and hence, it is possible to suppress rattling of the wind screen 31 generated by wind.

Further, on the rear portion 79 of the body portion 78 of the right-side slider 51R, a locking mechanism 93 is mounted. The locking mechanism 93 is engaged with the positioning plate 77 mounted on the right-side rail 43R for fixing a position of the wind screen 31 in the upward and downward direction from a surface of the drawing. The locking mechanism 93 is constituted of a compression coil spring 95 and a steel ball 96 which are stored in a hole 94 formed in the rear portion 79. Numeral 97 indicates a washer.

Here, it is sufficient that a distal end of the steel ball 96 is formed in a hemispherical shape, and a rod-shaped member which is formed by joining a hemisphere to a distal end of a solid rod may be used in place of the steel ball 96.

A hole 98 is formed in the positioning plate 77. By bringing the steel ball 96 into contact with the hole 98 using the compression coil spring 95 by pushing, it is possible to fix the wind screen 31 which is mounted on the body portion 78 of the right-side slider 51R by way of the connection plate 63.

Here, returning to Fig. 3, the right-side rail 43R is curved in the vehicle-body rearward direction, and the left rail half body (indicated by numeral 69 in Fig. 4) and the right rail half body (indicated by numeral 71 in Fig. 4) are jointed to each other using ten rail joining bolts 99, for example.

Here, the number of rail joining bolts 99 is not limited to ten, and may be increased or decreased corresponding to a length of the rail without any problems.

Further, in Fig. 2, the positioning plate 77 is assembled to the left-side rail 43L and the right-side rail 43R respectively and, for example, twelve holes 98 are formed in the positioning plate 77.

Here, although the number of holes 98 is set to twelve, the number of holes 98 may be increased or decreased without any problems when necessary.

Further, openings 101, 101 are formed in the left-side rail 43L and the right-side rail 43R respectively in the upward direction from a surface of the drawing and hence, it is possible to move the left-side slider 51L and the right-side slider 51R in the vertical direction on the drawing.
Further, by fitting the steel ball (indicated by numeral 96 in Fig. 4) in the holes 98 in a stepwise manner, it is possible to fix the wind screen 31 at a desired position in the vertical direction on the drawing.
Numeral 102 indicates a rail lid.

Further, the left-side rail 43L and the right-side rail 43R are mounted on the support member 32 with a smallest space in the lateral direction on the drawing which is the vehicle body width direction and hence, the wind screen 31 can be made small.
Next, the manner of operation of the above-mentioned wind screen structure is explained.

In Fig. 3, first of all, when the rider lifts the wind screen 31, the steel ball (indicated by numeral 96 in Fig. 4) which is housed in the right-side slider 51R is removed from the hole (indicated by numeral 98 in Fig. 4) formed in the positioning plate (indicated by numeral 77 in Fig. 4). Accordingly, the wind screen 31 and the right-side slider 51R can be moved in the vertical direction. Next, by moving the right-side slider 51R toward the upper portion 103 of the right-side rail 43R as indicated by a chain double-dashed line, the steel ball is fitted in the hole formed in the positioning plate thus fixing the wind screen 31 to the right-side rail 43R.

Further, by lowering the wind screen 31 indicated by the chain double-dashed line, the wind screen 31 and the right-side slider 51R can be moved in the vertical direction in the same manner as the above-mentioned operation. Accordingly, for example, it is possible to return the wind screen 31 to a position indicated by a solid line and to fix the wind screen 31 to the right-side rail 43R.

The right-side rail 43R is curved as viewed from a side of the vehicle body and hence, when the wind screen 31 is moved in the upward direction, it is possible to bring the wind screen 31 into an erected state.

Accordingly, in Fig. 4, the wind screen structure of the motorcycle 10 is constituted of the right-side rail 43R, the right-side slider 51R and the guide member 90R. Further, a drive source such as an electrically-operated motor becomes unnecessary and hence, it is possible to provide the wind screen structure of the motorcycle 10 which can move the wind screen 31 in the upward and downward direction from a surface of the drawing while manufacturing the wind screen structure at a low cost.

Further, the right-side slider 51R includes the locking mechanism 93 which is engaged with the right-side rail 43R for fixing the wind screen 31 and hence, it is possible to fix the wind screen 31 at a desired position in the upward and downward direction from a surface of the drawing.

Further, the right-side rail 43R is split in two, that is, into the left rail half body 69 and the right rail half body 71 and is formed by casting and hence, it is possible to easily manufacture the curved rail.

The above-mentioned locking mechanism 93 is constituted such that the steel ball is fitted in the hole formed in the positioning plate. Here, the locking mechanism may be also constituted by fitting a pawl in a hole formed in a plate. Next, an embodiment having the modified locking mechanism structure is explained.

Fig. 5 is a view showing a modified embodiment of the wind screen structure shown in Fig. 3. In Fig. 5, with respect to the structure which is in common with the structure shown in Fig. 3, parts identical with the parts shown in Fig. 3 are indicated by the same numerals, and their explanation is omitted. A rail 40B is constituted of a right rail 110R (described later in detail) which is fixed to an upper connection member 41R and a lower connection member 42R, and a left rail 110L (not shown in the drawing) which is fixed to a support member 32 in the same manner as the right rail 110R.

Further, a slider 50B is constituted of a right slider 120R (described later in detail) which is engaged with the right rail 110R, and a left slider 120L (not shown in the drawing) which is engaged with the left rail 110L.

Further, the right slider 120R includes a guide member 130R (described later in detail) not shown in the drawing which is configured to be in slidable contact with the right rail 110R in the upward and downward direction from a surface of the drawing which is a vehicle width direction, and the left slider 120L (not shown in the drawing) includes a guide member 130Lnot shown in the drawing which is configured to be in slidable contact with the left rail 110L (not shown in the drawing) in the upward and downward direction from a surface of the drawing.

Further, the right slider 120R includes a locking mechanism 140 (described later in detail), and a cable 141 is connected to the locking mechanism 140.
Numeral 142 indicates a cable storing pipe.

Here, the structure of the left rail 110L and the structure of the right rail 110R are substantially equal to each other, the structure of the left slider 120L and the structure of the right slider 120R are substantially equal to each other, and the structure of the guide member 130L and the structure of the guide member 130R are substantially equal to each other. Accordingly, hereinafter, the explanation is made with respect to the combined structure constituted of the right rail 110R, the right slider 120R and the guide member 130R. The explanation of the left rail 110L, the left slider 120L and the guide member 130L is omitted.

Fig. 6 is a cross-sectional view taken along a line 6-6 in Fig. 5. In the drawing, the right rail 110R has the lateral two-split structure and is formed by joining a left rail half body 111 and a right rail half body 112 which are formed by casting.
Connection members 113, 113 are respectively mounted on rear ends of these left rail half body 111 and right rail half body 112 by welding, and rear end portion of the respective connection portions 113, 113 and a lower connection member 42R are connected to each other using two bolts 61, 61 and nuts 114, 114.

Further, a left inner rail 115 is mounted on an inner side of the left rail half body 111 by welding, and a right inner rail 116 is mounted on an inner side of the right rail half body 112 by welding.

Here, as a mounting method of the connection members 113, 113, the left inner rail 115 and the right inner rail 116, a welding method is adopted. However, these parts may be joined by screws or rivets, and other joining methods may be adopted without any problems.

Further, a hole 117 is formed in the left inner rail 115. By engaging a pawl portion of a rotational plate described later with the hole 117, it is possible to fix the wind screen 31 mounted on the right slider 120R.

Further, the plurality of holes 117 is formed in the left inner rail 115 in the upward and downward direction from a surface of the drawing and hence, a position of the wind screen 31 can be changed in a stepwise manner.
Next, the detailed structure of the right slider 120R is explained.

The right slider 120R includes a body portion 121 which extends toward the right rail 110R, a left projecting portion 123 and a right proj ectingportion 124 which respectively project toward an inner surface of the right rail 110R are formed on a rear portion 122 of the body portion 121 and, at the same time, a recessed portion 125 is formed in the rear portion 122.

Further, the guide member 130R is mounted on the left projecting portion 123 and the right projecting portion 124 in a state that the right slider 120R is in slidable contact with the right rail 110R. The guide member 130R is constituted of a left guide 131 and a right guide 132, wherein the left guide 131 is mounted on the left projecting portion 123 using an adhesive agent, for example, and the right guide 132 is mounted on the right projecting portion 124 using an adhesive agent, for example. The left guide 131 and the right guide 132 are molded products made of polytetrafluoroethylene, for example.

Here, the mounting method of the left guide 131 and the right guide 132 adopts the adhesive agent. However, the mounting method may adopt a screw joint. Further, other mounting method may be used in place of this mounting method without any problems.
Further, although the left guide 131 and the right guide 132 are made of polytetrafluoroethylene, the left guide 131 and the right guide 132 may be made of polyethylene or polyethylene terephthalate, and the left guide 131 and the right guide 132 may be made of other resin material without any problems.

Further, the right slider 120R includes a locking mechanism 140 which is engaged with the left inner rail 115 for fixing a position of the wind screen 31 in the upward and downward direction from a surface of the drawing in the body portion 121.

The locking mechanism 140 is constituted of a support member 143 which extends in the right oblique downward direction in the drawing from the body portion 121, a rotational plate 146 having a non-liner cross section which is rotatably supported on a screw 144 which connects the support member 143 and the body portion 121 and, at the same time, forms a pawl portion 145 (described later in detail) which is engaged with the hole 117 on a distal end thereof, and a torsional coil spring 147 which is arranged between the rotational plate 146 and the support member 143 and, at the same time, has one end thereof mounted on the support member 143 and another end thereof mounted on the rotational plate 146 thus always engaging the pawl portion 145 of the rotational plate 146 with the inner rail 115.
Here, numeral 148 indicates a washer.

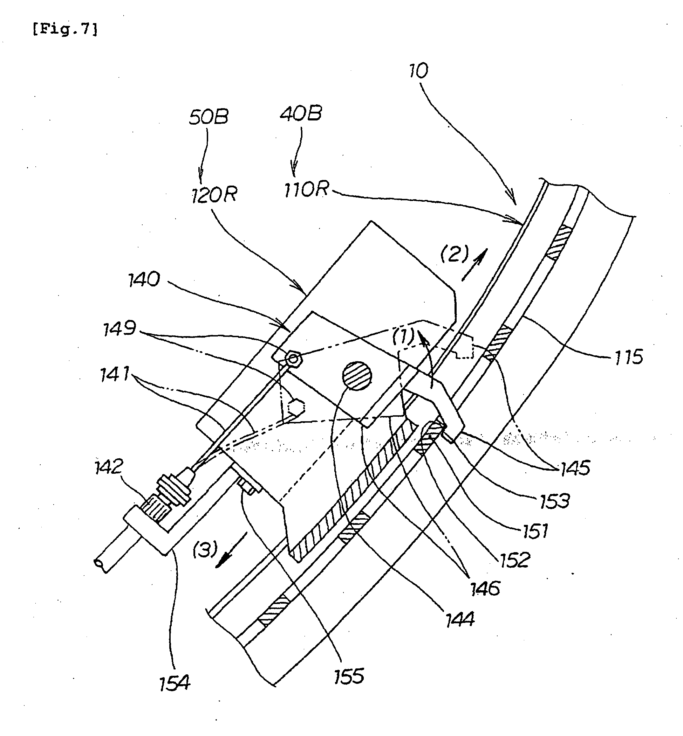

Fig. 7 is a cross-sectional view taken along a line 7-7 in Fig. 6. In the drawing, the rotational plate 146 is rotatably supported on the right slider 120R using the screw 144 which is the center of rotation. On a lower portion of the rotational plate 146, the cable 141 is mounted by a nut 149. The pawl portion 145 is engaged with a thick wall portion 151 of the left inner rail 115.

By bringing an inner surface 152 of the pawl portion 145 into contact with an inner surface 153 of the thick wall portion 151 of the left inner rail 115, it is possible to fix the right slider 120R to the right rail 110R.
Numeral 154 indicates a support member, and numeral 155 indicates a bolt.
Next, the manner of operation of the locking mechanism 140 is explained.

To move the right slider 120R to a right oblique upper position in the drawing, first of all, the rotational plate 146 is rotated in the counterclockwise direction in the drawing as indicated by an arrow (1) by pulling the cable 141 thus removing the pawl portion 145 from the thick wall portion 151 of the left inner rail 115 as indicated by a chain double dashed line. By lifting the wind screen (indicated by numeral 31 in Fig. 5) in such a state, it is possible to move the right slider 120R in the upward direction as indicated by an arrow (2).

Next, when the wind screen is lifted to a desired position, the rotational plate 146 is returned in the clockwise direction by releasing the cable 141. Accordingly, the pawl portion 145 is engaged with the thick wall portion 151 of the left inner rail 115 and hence, it is possible to fix the right slider 120R to the right rail 110R at a desired position.

Further, to move the right slider 120R in the left oblique downward direction in the drawing, in the same manner as the above-mentioned case, the right slider 120R assumes a movable state by pulling the cable 141. In such a state, by lowering the wind screen, it is possible to move the right slider 120R in the downward direction as indicated by an arrow (3).

Further, when the wind screen is lowered to a desired position, it is possible to fix the right slider 120R to the right rail 110R at a desired position by releasing the cable 141.

The locking mechanism 140 includes the torsional coil spring (indicated by numeral 147 in Fig. 6) and hence, in returning the rotational plate 146 to a position indicated by a solid line from a position indicated by a chain double dashed line, by merely releasing the pulled cable 141, it is possible to easily return the rotational plate 146 in the clockwise direction.

With respect to the above-mentioned right-side slider 51R (see Fig. 4), the compression coil spring (indicated by numeral 95 in Fig. 4) and the steel ball (indicated by numeral 96 in Fig. 4) are housed in the body portion (indicated by numeral 78 in Fig. 4) in the longitudinal direction of the vehicle body and hence, it is difficult to further shorten a length of the right-side slider 51R in the longitudinal direction of the vehicle body. If a length of the slider can be shortened, it is possible to arrange the wind screen closer to the rail so that a front upper portion of the vehicle body can be made small. An embodiment which can realize the above-mentioned miniaturization is explained hereinafter.

Fig. 8 is a cross-sectional view of another wind screen of a motorcycle according to the present invention. In Fig. 8, with respect to the structure which is in common with the structure shown in Fig. 3, parts identical with the parts shown in Fig. 3 are indicated by the same numerals, and their explanation is omitted.

A rail 40C is constituted of a left rail 160L (described later in detail) which is fixed to an upper connection member 41L and a lower connection member 42L extending from a support member 32, and a right rail 160R (not shown in the drawing) which is fixed to an upper connection member 41R (not shown in the drawing) and a lower connection member 42R (not shown in the drawing) extending from the support member 32.

Further, a slider 50C is constituted of a left slider 170L (described later in detail) which is engaged with the left rail 160L, and a right slider 170R (not shown in the drawing) which is engaged with the right rail 160R.

Further, the left slider 170L includes a guide member 180L (described later in detail) not shown in the drawing which is configured to be in slidable contact with the left rail 160L in the upward and downward direction from a surface of the drawing which is a vehicle width direction, and the right slider 170R includes a guide member 180R not shown in the drawing which is configured to be in slidable contact with the right rail 160R in the upward and downward direction from a surface of the drawing.

Here, the structures of the left rail 160L and the right rail 160R, the structures of the left slider 170L and the right slider 170R, and the structures of the guide member 180L and the guide member 180R are substantially equal to each other and hence, hereinafter, the explanation is made with respect to the combined structure constituted of the left rail 160L, the left slider 170L and the guide member 180L, and the explanations of the right rail 160R, the right slider 170R and the guide member 180R are omitted.

Fig. 9 is a cross-sectional view taken along a line 9-9 in Fig. 8. In the drawing, the left rail 160L has the laterally two-split structure and is formed by joining a left rail half body 161 and a right rail half body 162 which are formed by casting.

Further, the left rail half body 161 or the right rail half body 162 is a rail which includes a rear portion 163, a midst portion 164 and a front portion 165. That is, the left rail half body 161 or the right rail half body 162 is a rail having a large wall thickness which is contiguously formed of the rear portion 163, the midst portion 164 and the front portion 165.

Further, a positioning plate 167 is mounted on an inner surface 166 of the left rail half body 161, and a hole 168 is formed in the positioning plate 167.
Here, returning to Fig. 8, the six holes 168 are formed in the positioning plate 167 at a fixed interval in the longitudinal direction of the positioning plate 167.

Here, the number of holes 168 is not limited to six and may be suitably changed without any problems.
Next, the detailed structure of the left slider 170L is explained.

The left slider 170L includes a body portion 171 which mounts a joint plate 63 thereon by a connection screw 62 and extends toward the left rail 160L. On a rear portion 172 of the body portion 171, a left projecting portion 173 (described later in detail) and a right projecting portion 174 which respectively project toward an inner surface of the left rail 160L are formed.

The guide member 180L is mounted on these left projecting portion 173 and right projecting portion 174 in a state that the left slider 170L is in slidable contact with the left rail 160L. The guide member 180L is constituted of a left guide 181 (described later in detail) and a right guide 182, wherein the left guide 181 is mounted on the left projecting portion 173, and the right guide 182 is mounted on the right projecting portion 174. The left guide 181 and the right guide 182 are molded products made of polytetrafluoroethylene, for example.

Here, although the left guide 181 and the right guide 182 are made of polytetrafluoroethylene, the left guide 181 and the right guide 182 may be made of polyethylene or polyethylene terephthalate, and the left guide 181 and the right guide 182 may be made of other resin material without any problems.

On a rear portion 172 of the body portion 171 of the left slider 170L, for fixing a position of the wind screen 31 in the upward and downward direction from a surface of the drawing, a locking mechanism 190 which is engaged with the positioning plate 167 mounted on the left rail half body 161 is mounted.
The detailed structure of the locking mechanism 190 is explained in conjunction with a following drawing.

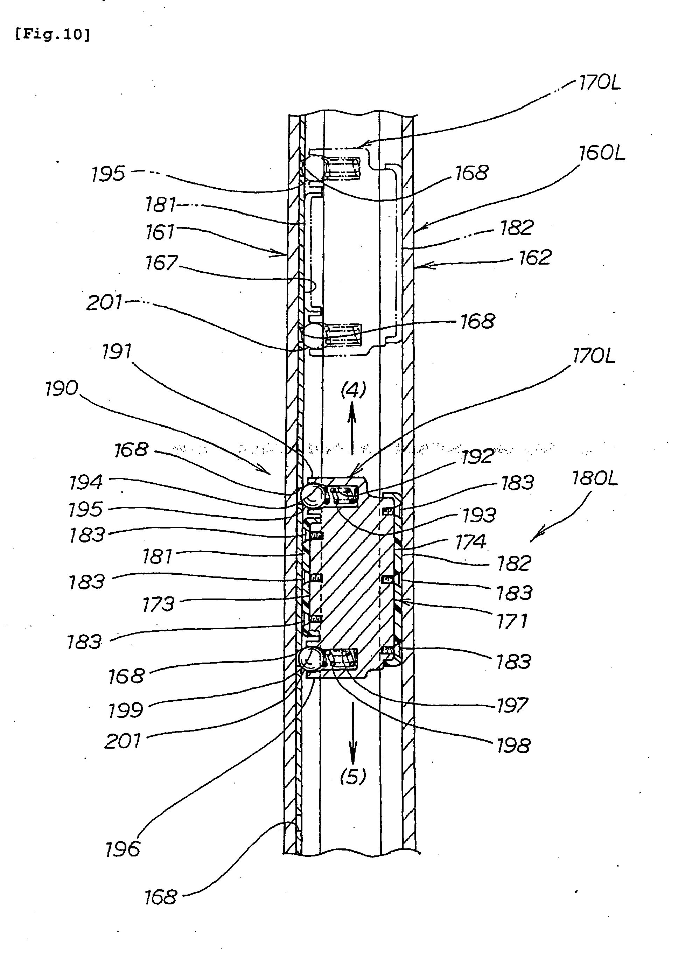

Fig. 10 is a cross-sectional view taken along a line 10-10 in Fig. 9. In the drawing, on the left projecting portion 173 and the right projecting portion 174 of the left slider 170L, the left guide 181 and the right guide 182 are mounted using a plurality of screws 183, for example.

Here, the mounting method of the left guide 181 and the right guide 182 adopts the screw joint. However, the mounting method may adopt an adhesive agent. Further, other mounting method may be used in place of this mounting method without any problems.

The locking mechanism 190 is constituted of a hole 192 which is formed in an upper end portion 191 of the body portion 171 of the left slider 170L, a compression coil spring 193 which is stored in the hole 192, a steel ball 195 which is inserted into a guide hole 194 having a diameter larger than a diameter of the hole 192, a hole 197 which is formed in a lower end portion 196 of the body portion 171, a compression coil spring 198 which is stored in the hole 197, and a steel ball 201 which is inserted into a guide hole 199 having a diameter larger than a diameter of the hole 197.

Here, it is sufficient that distal ends of the steel ball 195 and the steel ball 201 are formed in a hemispherical shape, and a rod-shaped member which is formed by joining a hemisphere to a distal end of a solid rod may be used in place of the steel ball 195 and the steel ball 201.

The left slider 170L is fixed to the left rail 160L in such a manner that two steel balls 195, 201 are pushed by two compression coil springs 193, 198 so that the steel balls 195, 201 are fitted in the holes 168, 168 formed in the positioning plate 167.

Further, the left slider 170L includes the left guide 181 which is arranged between the steel ball 195 and the steel ball 201. Due to such a constitution, the left slider 170L can smoothly slide on the left rail 160L even when the steel balls 195, 201 are removed from the holes 168, 168 formed in the positioning plate 167.
Next, the manner of operation of the locking mechanism 190 is explained.

When the rider lifts the wind screen (indicated by numeral 31 in Fig. 8), the steel balls 195, 201 which are housed in the left slider 170L are removed from the holes 168, 168 formed in the positioning plate 167. Accordingly, the wind screen and the left slider 170L can be moved in the vertical direction. Next, by moving the left slider 170L toward an upper portion of the left rail 160L as indicated by an arrow (4), the steel balls 195, 201 are fitted in the holes 168, 168 formed in the positioning plate 167 thus fixing the left slider 170L to the left rail 160L as indicated by a chain double-dashed line.
Accordingly, it is possible to move the wind screen 31 in the upward direction as shown in Fig. 8.

Returning to Fig. 10, when the rider lowers the wind screen (indicated by numeral 31 in Fig. 8), the wind screen and the left slider 170L become movable in the vertical direction in the substantially above-mentioned manner. By moving the left slider 170L toward a position below the left rail 160L as indicated by an arrow (5), it is possible to fix the left slider 170L to the left rail 160L. That is, the wind screen can be moved downwardly.

In Fig. 9, the left slider 170L includes the guide member 180L which is in slidable contact with the left rail 160L in the vehicle body width direction. Accordingly, compared to a case in which the guide member 180L is mounted on the left slider 170L in the longitudinal direction of the vehicle body, an assembled size of the left rail 160L and the left slider 170L in the longitudinal direction of the vehicle body can be made small. Accordingly, the wind screen 31 can be arranged closer to the cowling 29. To observe such a constitution from a side of the vehicle body, a mounting height of the wind screen 31 can be lowered. Due to such a constitution, it is possible to further miniaturize the motorcycle 10.

Here, in the above-mentioned embodiments, the explanation has been made with respect to the case in which the locking mechanism adopted by the present invention is constituted of the steel ball and the positioning plate or the pawl portion and the left inner rail. However, the locking mechanism may adopt a combination of a pin and a positioning plate, and the locking mechanism may also adopt other structure in place of the above-mentioned structure without any problems.
10: motorcycle
15: main frame (vehicle body)
29: cowling
31: wind screen
40, 40B, 40C: rail
43L, 110L, 160L: left rail
43R, 110R, 160R: right rail
50, 50B, 50C: slider
51L, 120L, 170L: left slider
51R, 120R, 170R: right slider
69, 111, 161: left rail half body
71, 112, 162: right rail half body
77, 167: positioning plate
90L, 90R, 130L, 130R, 180L, 180R: guide member
91, 131, 181: left guide
92, 132, 182: right guide
93, 140, 190: locking mechanism
96, 195, 201: steel ball
98, 117, 168: hole
115: left inner rail
116: right inner rail
145: pawl portion
146: rotational plate

## Claims

1. A motorcycle (10) comprising a wind screen structure which is constituted by a wind screen (31) being mounted on an upper portion of a cowling (29) which covers a front upper portion of a vehicle body (15) in a vertically movable manner,
a left-side rail (43L) and a right-side rail (43R) which are fixed to a vehicle body side and extend in a vertical direction, and a left-side slider (51L) and a right-side slider (51 R) which are mounted on a wind screen side and are engaged with the left-side rail (43L) and the right-side rail (43R), respectively, wherein each of the left-side (51L) and the right-side (51R) sliders includes a guide member (90L, 90R) which is in slidable contact with the left-side rail (43L) and the right-side rail (43R), respectively, in a width direction of the vehicle body (15),
**characterized in that**
each of the left-side (51L) and the right-side (51 R) sliders includes a locking mechanism (93) which is adapted to be engaged with the left-side rail (43L) and the right-side rail (43R), respectively, so that the wind screen (31) can be fixed at a desired position,
wherein in a lateral direction as viewed from a front side of the vehicle body (15) each of the left-side (43L) and the right-side (43R) rails is split in two half bodies, a left rail half body (69) and a right rail half body (71), and
wherein each of the left-side (43L) and the right-side (43R) rails is formed by joining the left rail half body (69) and the right rail half body (71), respectively.

2. The motorcycle according to claim 1, **characterized in that**
- the left-side (43L) and the right-side (43R) rails are curved, so that the wind screen may be moved upward in an erected state, and
the left-side (43L) and the right-side (43R) rails are formed by casting.

## Patentansprüche

1. Motorrad (10), das eine Windschutzscheibenstruktur aufweist, die durch eine Windschutzscheibe (31), die auf einem oberen Abschnitt einer Motorverkleidung (29) montiert ist, welche einen vorderen oberen Abschnitt einer Fahrzeugkarosserie (15) in einer vertikal beweglichen Weise bedeckt, gebildet ist,
eine linkseitige Schiene (43L) und eine rechtsseitige Schiene (43R), die an einer Fahrzeugkarosserieseite befestigt sind und sich in einer vertikalen Richtung erstrecken, und ein linksseitiges Gleitstück (51L) und ein rechtsseitiges Gleitstück (51R), die auf eine Windschutzscheibenseite montiert sind und jeweils mit der linksseitigen Schiene (43L) und der rechtsseitigen (43R) Schiene in Eingriff sind, wobei jedes der linkseitigen (51L) und der rechtsseitigen (51R) Gleitstücke ein Führungselement (90L, 90R) umfasst, das jeweils in verschiebbarem Kontakt mit der linksseitigen Schiene (43L) und der rechtsseitigen Schiene (43R) in einer Breitenrichtung der Fahrzeugkarosserie (15) ist,
**dadurch gekennzeichnet, dass**
jedes der linkseitigen (51L) und rechtsseitigen (51R) Gleitstücke einen Sperrmechanismus (93) umfasst, der geeignet ist, jeweils mit der linksseitigen Schiene (43L) und der rechtsseitigen Schiene (43R) in Eingriff gebracht zu werden, so dass die Windschutzscheibe (31) an einer gewünschten Position befestigt werden kann, wobei in einer von einer Vorderseite der Fahrzeugkarosserie (15) seitlichen Richtung gesehen jede der linksseitigen (43L) und der rechtsseitigen (43R) Schienen in zwei Halbkörper, einen linken Schienenhalbkörper (69) und einen rechten Schienenhalbkörper (71) geteilt ist, und
wobei jede der linksseitigen (43L) und rechtsseitigen (43R) Schienen gebildet ist, indem der linke Schienenhalbkörper (69) und der rechte Schienenhalbkörper (71) jeweils verbunden werden.

2. Motorrad nach Anspruch 1, **dadurch gekennzeichnet, dass**
die linksseitige (43L) und die rechtsseitige (43R) Schiene gekrümmt sind, so dass die Windschutzscheibe in einen aufgerichteten Zustand aufwärts bewegt werden kann, und
die linksseitige (43L) und die rechtsseitige (43R) Schiene durch Gießen ausgebildet sind.

## Revendications

1. Motocyclette (10) comprenant une structure de pare-brise qui est constituée par un pare-brise (31) qui est monté sur une partie supérieure d'un carénage (29) qui recouvre une partie supérieure avant d'un corps de véhicule (15) d'une manière verticalement mobile,
un rail latéral gauche (43L) et un rail latéral droit (43R) qui sont fixés sur un côté du corps de véhicule et s'étendent dans une direction verticale, et une glissière latérale gauche (51L) et une glissière latérale droite (51R) qui sont montées sur un côté de pare-brise et sont mises en prise avec le rail latéral gauche (43L) et le rail latéral droit (43R) respectivement, dans laquelle chacune des glissières latérale gauche (51L) et latérale droite (51R) comprend un élément de guidage (90L, 90R) qui est en contact coulissant avec le rail latéral gauche (43L) et le rail latéral droit (43R) respectivement, dans le sens de la largeur du corps de véhicule (15),
**caractérisée en ce que** :
chacune des glissières latérale gauche (51L) et latérale droite (51R) comprend un mécanisme de blocage (93) qui est adapté pour être mis en prise avec le rail latéral gauche (43L) et le rail latéral droit (43R) respectivement, de sorte que le pare-brise (31) peut être fixé dans une position souhaitée,
dans laquelle, dans une direction latérale, comme observé depuis un côté avant du corps de véhicule (15), chacun des rails latéral gauche (43L) et latéral droit (43R) est partagé en deux demi-corps, un demi-corps de rail gauche (69) et un demi-corps de rail droit (71), et
dans laquelle chacun des rails latéral gauche (43L) et latéral droit (43R) est formé en assemblant le demi-corps de rail gauche (69) et le demi-corps de rail droit (71) respectivement.

2. Motocyclette selon la revendication 1, **caractérisée en ce que** :
les rails latéral gauche (43L) et latéral droit (43R) sont incurvés, de sorte que le pare-brise peut être déplacé vers le haut dans un état redressé, et
les rails latéral gauche (43L) et latéral droit (43R) sont formés par moulage.
